(19) Europäisches Patentamt
European Patent Office
Office européen des brevets

(11) **EP 1 357 144 B1**

(12) **EUROPEAN PATENT SPECIFICATION**

(45) Date of publication and mention
of the grant of the patent:
**22.08.2007 Bulletin 2007/34**

(51) Int Cl.:
*C08K 3/40* (2006.01)     *C08K 3/00* (2006.01)
*C08K 7/14* (2006.01)     *C08L 23/10* (2006.01)
*C08L 23/00* (2006.01)

(21) Application number: **02009125.2**

(22) Date of filing: **24.04.2002**

(54) **Polypropylene compositions**

Polypropylenzusammensetzungen

Compositions de polypropylene

(84) Designated Contracting States:
**AT BE CH CY DE DK ES FI FR GB GR IE IT LI LU MC NL PT SE TR**

(43) Date of publication of application:
**29.10.2003 Bulletin 2003/44**

(73) Proprietor: **Borealis Polyolefine GmbH**
**2320 Schwechat-Mannswörth (AT)**

(72) Inventors:
• **Schininger, Renate**
**A-1040 Linz (AT)**
• **Aumayr, Günther**
**A-4232 Hagenberg (AT)**
• **Kastner, Erwin**
**A-4040 Linz (AT)**

(74) Representative: **Grünecker, Kinkeldey,**
**Stockmair & Schwanhäusser**
**Anwaltssozietät**
**Maximilianstrasse 58**
**80538 München (DE)**

(56) References cited:
WO-A-00/71338          US-A- 4 603 153
US-A- 5 082 889

## Description

### Introduction

The invention relates to glassfiber-reinforced polypropylene compositions with an improved balance of mechanical and thermomechanical properties. More particularly the invention relates to glassfiber-reinforced polypropylene compositions with an improved balance of tenacity, stiffness, impact strength and heat distortion resistance.
The compositions of the invention are particularly useful for highly stressed parts in automotive and electric appliance industry applications.

### Background of the Invention

Reinforcement of polypropylene with short glass fibers is already state of the art for some considerable time. Major developments have however been scarce in previous years.
The properties profile of these compounds is largely determined by the base polymer (mostly polypropylene homopolymer with medium or high flowability), the amount of glass fibers (usually 20 or 30 wt%) and the used coupling agent.
It was possible to achieve properties like E-modules of about 6000 MPa and heat distortion resistances which were significantly higher than those of e.g. talcum reinforced compounds.
Highly stressed parts, e.g. under the bonnet, require both high stiffness at elevated temperatures as well as very good impact behaviour.
These requirements could until now not be met by standard short-fiber reinforced polypropylene. These parts are therefore until now produced from other technical polymer compounds, e.g. glass-fiber reinforced polyamide.
The improvement in mechanical properties of polypropylenes which is brought about by the glass-fiber reinforcement is largely comprised of higher tensile strength and higher heat distortion temperature. Glass fiber reinforcement has however the disadvantage that these compounds break very brittle and do not show satisfactory impact strength.
In order to increase impact strength it is possible to add high-impact elastomers. This however has the drawback that stiffness and heat distortion temperature are drastically decreased.
Typical commercially available glassfiber reinforced polypropylene compounds are based on polypropylene homo- or polypropylene-ethylene-copolymers with an MFR (230 °C/2.16 kg) of the matrix of 2 -50 g/10 min, they comprise from 10 - 50 wt% of chopped glass fibers having a diameter of 13 -14 $\mu$m with a starting length before compounding of 3 - 4.5 mm and a polypropylene compatible sizing and they comprise a maleic acid anhydride grafted polypropylene as coupling agent.
The mechanical properties of these compounds depend on the mechanical properties of the base polymer, the glass fiber length, compounding technology, coupling strength between fibers and matrix and on the amount of glass fibers.
Typical values for mechanical and thermomechanical properties are:

Tensile strength according to ISO 527 of 70 -100 MPa, unnotched impact strength according to ISO 179 of 20 -50 kJ/m$^2$, absorbed energy in penetration test according to DIN 53443/T2 of 1 - 5 J/mm and Heat Distortion Temperature according to ISO 75 A of 120 - 150 °C.

WO 00/71338 discloses a co-extruded sheet which comprises a layer containing propylene polymers.
US 4,603,153 discloses a glass fiber reinforced resin composition.
US 5,082,889 discloses a reinforced polypropylene composition.

### Object of the Invention

It is the object of the present invention to provide glassfiber-reinforced polypropylene compositions with an improved balance of mechanical and thermomechanical properties, i.e. an improved balance of tenacity, stiffness, impact strength and heat distortion resistance. It is a further object of the invention to provide articles made from these glassfiber-reinforced polypropylene compositions especially for automotive and electric appliance applications.

### Brief description of the Invention

The object of the invention has been achieved by providing glassfiber-reinforced polypropylene compositions which are comprised of highly crystalline low viscous propylene homo- or copolymers and highly crystalline highly viscous propylene-ethylene copolymers, as defined in claim 1. Prefered embodiments are defined in claims 2 to 7. Further the present invention provides the use as defined in claim 8.

The invention therefore relates to glassfiber-reinforced polypropylene composition with an improved balance of mechanical and thermomechanical properties, which consists of

a) 30 - 92 wt% of a component **A** which is a propylene homopolymer with an isotacticity $\geq$ 96% and/or a propylene copolymer which comprises up to 10 wt% of one or more $C_4$-$C_8$ $\alpha$-olefins and/or ethylene with an isotacticity of the propylene homopolymer matrix of $\geq$ 96%,
which component **A** has an MFR of $\geq$ 10 g/10 min at 230 °C/2.16 kg,
b) 3 - 35 wt% of a component **B** which is a heterophasic propylene/ethylene copolymer with up to 10 wt% of ethylene with an isotacticity of the propylene homopolymer matrix of $\geq$ 96%, which component **B** has an MFR of 0.1 to 2.0 g/10 min at 230 °C/2.16 kg and
c) 5 - 50 wt% of reinforcing glass fibers, and 0 - 5 wt%, based on the weight of the composition, of compatibilizer, and additives in an amount of from 0 to less than 2 wt % each based on the total weight of the composition.

**Detailed description of the Invention**

Component **A** is a propylene homopolymer and/or a propylene copolymer which comprises up to 10 wt% of one or more $C_4$-$C_8$ $\alpha$-olefins and/or ethylene, which first component **A** has an MFR of $\geq$ 10 g/10 min at 230 °C/2.16 kg and an isotacticity of the homoplymer or, in case of a copolymer, of the homopolymer matrix, of $\geq$ 96%.

Component A is a highly crystalline (isotacticity $\geq$ 96 %) and low viscous (MFR $\geq$ 10 g/10 min at 230 °C/2.16 kg) propylene homopolymer or propylene copolymer or mixtures thereof. In case component **A** comprises a propylene copolymer it is preferably a heterophasic copolymer.

The polymer of component **A** may be produced by single- or multistage process polymerisation of propylene or propylene and $\alpha$-olefin and/or ethylene such as bulk polymerisation, gas phase polymerisation, slurry polymerisation, solution polymerisation or combinations thereof using conventional catalysts. Those processes are well known to one skilled in the art.

A preferred process is a combination of bulk slurry loop reactor(s) and gas phase reactor(s). The homo- or matrix polymer can be made either in loop reactors or in a combination of loop and gas phase reactor. The polymer produced in this way is transferred into another reactor and the propylene/$\alpha$-olefin rubber is polymerised. Preferably this polymerisation step is done in a gas phase polymerisation.

A suitable catalyst for the polymerisation of the heterophasic copolymer is any stereospecific catalyst for propylene polymerisation which is capable of polymerising and copolymerising propylene and comonomers at a temperature of 40 to 110°C and at a pressure from 10 to 100 bar. Ziegler Natta catalysts as well as metallocene catalysts are suitable catalysts.

One skilled in the art is aware of the various possibilities to produce propylene homo- and copolymers and will simply find out a suitable procedure to produce suitable polymers which are used in the present invention.

Component **A** has an MFR of $\geq$ 10 g/10 min, preferably from 15 to 50 g/10 min, more preferably from 15 to 30 g/10 min and most preferably 18 to 25 g/10 min at 230 °C/2.16 kg.

The isotacticity of a polymer of component **A** is $\geq$ 96 %, preferably $\geq$ 97 % and more preferably $\geq$ 98 %. Higher values for isotacticity are indicating higher degrees of crystallinity. In this document, if not otherwise mentioned, isotacticity of a copolymer always means the isotacticity of the homopolymer matrix of the copolymer.

A copolymer, of which component **A** may be partially or completely comprised, has a comonomer content of up to 10 wt%, preferably of up to 5 wt% and more preferably of up to 3 wt%.

The preferred polymers for component **A** are propylene homopolymer and propylene copolymers, which, in case of copolymers, are preferably heterophasic copolymers. These preferred polymers for component **A** are polymers exhibiting a high degree of stiffness, which correlates with crystallinity and thus with isotacticity.

Component **B** is a heterophasic propylene/ethylene copolymer with up to 10 wt% of ethylene and an isotacticity $\geq$ 96 %, which second component **B** has an MFR of 0.1 to 2.0 g/10 min at 230 °C/2.16 kg.

Component **B** is a highly crystalline (isotacticity $\geq$ 96 %) and highly viscous (MFR = 0.1 - 2.0 g/10 min at 230 °C/2.16 kg) propylene copolymer with a considerable comonomer content (ethylene content up to 10 wt%).

The polymer of component **B** may be produced by any process which is suitable for producing a heterophasic copolymer of component **A.**

Component **B** has an MFR of from 0.1 to 2.0 g/10 min, preferably 0.1 to 1.0 g/10 min and more preferably 0.2 to 0.8 g/10 min at 230 °C/2.16 kg.

The isotacticity of a polymer of component **B** is $\geq$ 96 %, preferably $\geq$ 97 % and more preferably $\geq$ 98 %.

The copolymer of component **B** has an ethylene content of up to 10 wt%, preferably of up to 7 wt% and more preferably from 2 to 6 wt%.

Component **B** is present in the polypropylene composition of the present invention in an amount of 3 - 35 wt%, preferably in an amount of 5 - 15 wt%.

The compositions according to the invention comprise from 5 - 50 wt% of reinforcing glass fibers, preferably from 20 - 40 wt%.

The compositions of the present invention usually also comprise a compatibilizer which is necessary to enhance miscibility and dispersibility of the polar glass-fibers in the non-polar polypropylene matrix. While the invention is not restricted to a certain type of compatibilizer and thus any type of compound is suitable which fulfills the above requirement, a maleic acid anhydride grafted propylene homo- or propylene/ethylene block copolymer is preferred. This type of compatibilizer chemically reacts with amino silanes of the sizing of the glass fibers. The compatibilizer may be present in the range of from 0.5 to 5 wt% based on the weight of the composition.

According to an advantageous embodiment of the present invention the reinforcing glassfibers are predominantly comprised of glassfibers with a filament-diameter of about 10 - 15 $\mu$m.
Very good mechanical properties, especially a further increased impact strength can be achieved with glassfibers having a rather small diameter, while maintaining the other relevant properties, especially heat distortion resistance.

Due to the excellent mechanical and thermomechanical properties of the compositions according to the invention they are perfectly suitable for producing articles with an improved balance of mechanical and thermomechanical properties for automotive and electric applicance applications.

The compositions of the present invention may further comprise conventional additives, such as antioxidants, stabilisers, coloring agents, UV stabilisers, nucleating agents, antistatic agents, slip/mould release agents, fillers, etc. These additives may be present at less than 2 wt% each, more preferably less than 0.5 wt% based on the total weight of the composition.

Examples of such conventional additives include Irganox 1010, Irganox B 225 and Irgafos 168 (commercially available stabilizers form Ciba Speciality Chemicals), calcium stearate and synthetic hydrotalcite (e.g. DHT-4A from Kyowa Chemical Industry) and 1,2:3,4-di(ethylbenzylidene)sorbitol - EBDS (e.g. NC-4 from Mitsui Toatsu and 1,3:2,4 bis(3,4-dimethylbenzylidene)sorbitol - DMBDS (e.g. Millad 3988 from Milliken Chemicals).

The polyolefin compositions of the present invention are produced by mixing the polymers of component **A** with those of component **B** and glass fibers and adding conventional additives and/or stabilisers and/or fillers.

Preferably, mixing is done by melt blending in an extruder or another melt blending unit, preferably in a twin screw extruder usually followed by pelletisation.
The components may be melt blended as such, or melt blending can be done in the presence of a peroxide component for increasing the melt flow rate of the composition. Then the peroxide, preferably an organic peroxide, which is suitable for degradation of polypropylene (visbreaking) is fed to the blending unit together with components **A** and **B** or the peroxide may be fed separately into the melt blending unit. Alternatively, either component **A** or component **B** may be visbroken before it is melt blended with the other component and additives

**Measurement Methods**

**Isotacticity**

Isotacticity is determined by FTIR measurement and calculated as peak ratio $A_{998}/A_{973}$ (described in T.Sundell, H. Fagerholm & H. Crozier, *Isotacticity determination of polypropylene using FT-Raman spectroscopy,* Polymer 37, 1996, 3227-31).

**MFR**

The melt flow rates (MFR) were measured under a load of 2.16 kg at 230 °C. The melt flow rate is that quantity of polymer in grams which the test apparatus standardized to ISO 1133 extrudes within 10 minutes at a temperature of 230 °C under a load of 2.16 kg.

**Impact Strength**

The notched impact strength (NIS) was determined according to ISO 179 / 1eA at 23 °C by using injection molded test specimens as described in EN ISO 1873-2 (80 x 10 x 4 mm).
The unnotched impact strength (IS) was determined according to ISO 179 / 1eU at 23 °C by using injection molded test specimens as described in EN ISO 1873-2 (80 x 10 x 4 mm).

**Flexural Modulus**

Determined according to ISO 178 using injection molded test specimens as described in EN ISO 1873-2 (80 x 10 x 4 mm).

**Tensile Modulus**

Tensile Modulus was determined according to ISO 527 using injection molded test specimens as described in EN ISO 1873-2 (170 x 10 x 4 mm).

**Tensile Strength**

Tensile Strength was determined according to ISO 527 using injection molded test specimens as described in EN ISO 1873-2 (170 x 10 x 4 mm).

**Absorbed Energy (AE) - Biaxial Impact Test**

The Biaxial Impact Test for determining Absorbed Energy was performed according to ISO 6603-2 using injection molded test specimens as described in EN ISO 1873-2 (60 x 60 x 3 mm).

**Heat Distortion Temperature**

Heat Distortion Temperature (HDT) was determined according to ISO 75 A using injection molded test specimens as described in EN ISO 1873-2 (80 x 10 x 4 mm).

**Examples**

The following base polymer materials, the characteristics of which are given in table 1, were used for producing the examples according to the invention and comparative examples

**Table 1**

| | Polymer | MFR | Flex.Mod. | IS | NIS | $C_2$ | isotacticity | |
|---|---|---|---|---|---|---|---|---|
| | | [g/10 min] | [MPa] | [kJ/m2] | [kJ/m2] | [wt%] | [%] | |
| | | | | | | | | |
| | Polymer 1 | 20 | 2000 | 80 | 2 | - | 0.979 | |
| Comp. | Polymer 2 | 20 | 1300 | 130 | 3 | - | 0.942 | |
| | **A** Polymer 3 | 20 | 2000 | 90 | 2.5 | - | 0.979 | |
| Comp. | **B** Polymer 4 | 0.3 | 1100 | nB | 60 | 8.3 | 0.947 | |
| | Polymer 5 | 0.25 | 1800 | nB | 60 | 4 | 0.965 | |

nB: no Break

The polymers were mixed with 2 wt% compatibilizer, 0.2 wt% glyceryl monostearate and 0.1 wt% Irganox B 225 and were then compounded with the respective amount of glass fibers in a laboratory twin-screw extruder Berstorff ZE 40 A 37 D with a temperature profile 180/200/210/220/220/230/230/220/225/220 and a screw speed of 300 rpm. Glass fibers from Owens Corning (GF OCF CS 144) were used (chopped to a starting length of about 4 mm). As compatibilizer, a maleic acid anhydride grafted ethylene/propylene blockcopolymer with an MFR of 35 g/10 min and containing 1.0 wt% of grafted maleic acid anhydride, was used.

**Table 2**

| | | C1 | 2 | 3 | 4 | 5 | C8 | C9 |
|---|---|---|---|---|---|---|---|---|
| Polymer 1 | [wt %] | 70 | 55 | 40 | - | - | - | 40 |
| Polymer 2 | [wt %] | - | - | - | - | - | 40 | - |
| Polymer 3 | [wt %] | - | - | - | 50 | 55 | - | - |
| Polymer 4 | [wt %] | - | - | - | - | - | - | 30 |
| Polymer 5 | [wt %] | - | 15 | 30 | 15 | 10 | 30 | - |

(continued)

| | | C1 | 2 | 3 | 4 | 5 | C8 | C9 |
|---|---|---|---|---|---|---|---|---|
| Glass fibers | [wt %] | 30 | 30 | 30 | 35 | 35 | 30 | 30 |
| | | | | | | | | |
| MFR$_{composition}$ | [g/10 min] | 6.5 | 2.9 | 1.3 | 1.3 | 1.8 | 1.6 | 1.3 |
| Tensile Modulus | [MPa] | 7050 | 6970 | 6690 | 7910 | 8420 | 6440 | 6400 |
| Tensile Strength | [MPa] | 104.9 | 99.6 | 94.6 | 101.4 | 106.0 | 92.0 | 88.7 |
| Flexural Modulus | [MPa] | 6070 | 6150 | 6880 | 6610 | 6940 | 5570 | 5630 |
| IS | [kJ/m$^2$] | 47.9 | 49.1 | 48.4 | 55.3 | 54.9 | 50.6 | 48.6 |
| NIS | [kJ/m$^2$] | 9.9 | 10.7 | 11.8 | 12.1 | 12.0 | 12.7 | 13.0 |
| Absorbed Energy | [J] | 6.7 | 8.1 | 8.6 | 9.5 | 8.1 | 8.7 | 9.2 |
| HDT | [°C] | 151 | 147 | 144 | 148 | 150 | 142 | 141 |

MFR$_{composition}$ is the MFR of the overall composition with glass fibers.

Injection molded test bars were produced from the glassfiber-reinforced polyproylene compositions. For the biaxial impact test injection molded test plates (60 x 60 x 3 mm) were produced. All test specimens were stored for at least 96 hrs at room temperature before determination of mechanical and thermomechanical properties.

In order to demonstrate the applicability of inventive compositions for electric appliance and automotive applications, especially in "under the bonnet" - situations, a number of inventive compositions was tested to determine their fatigue crack growth (FCG) behaviour. General Background, Methodology and Experimental Results of these tests are described below:

> Fig. 1 is a schematic representation of a CT-type test specimen
> Fig. 2 is a schematic representation of crack growth behaviour of polymers under fatigue loads
> Fig. 3 shows the fracture mechanics of the inventive example 5 compared to glassfibre reinforced polyamide PA6 and compared to a conventional glass-fibre reinforced polypropylene (PP-GF30).

## GENERAL BASICS AND METHODOLOGY OF LINEAR ELASTICS FRACTURE MECHANICS (LEFM)

The fatigue crack growth (FCG) behaviour classification of short glass fibre reinforced Polypropylene grades is based on a linear elastic fracture mechanics (LEFM) methodology. The FCG-tests are performed under a sinusoidal load at a frequency of 10 Hz and R-ratios ($F_{min}/F_{max}$) of 0.1.

GENERAL BACKGROUND

According to the concepts of linear elastic fracture mechanics (LEFM), the growth rate of a sharp crack in linear elastic materials with small scale plasticity is governed only by the applied stress intensity factor, $K_I$ (index I stands for opening mode or pure tensile loading conditions), which describes the local crack tip stress and strain field [Kinloch, A.J. and Young, R.J. (1983). Fracture Behaviour of Polymers, Applied Science Publishers Ltd., Barking]. The stress intensity factor, $K_I$, can in general be expressed as:

$$K_I = \sigma \cdot \sqrt{a} \cdot Y$$

where $\sigma$ is the applied stress, a the crack length and Y is a non-dimensional correction function accounting for crack and component geometry as well as the type of loading.

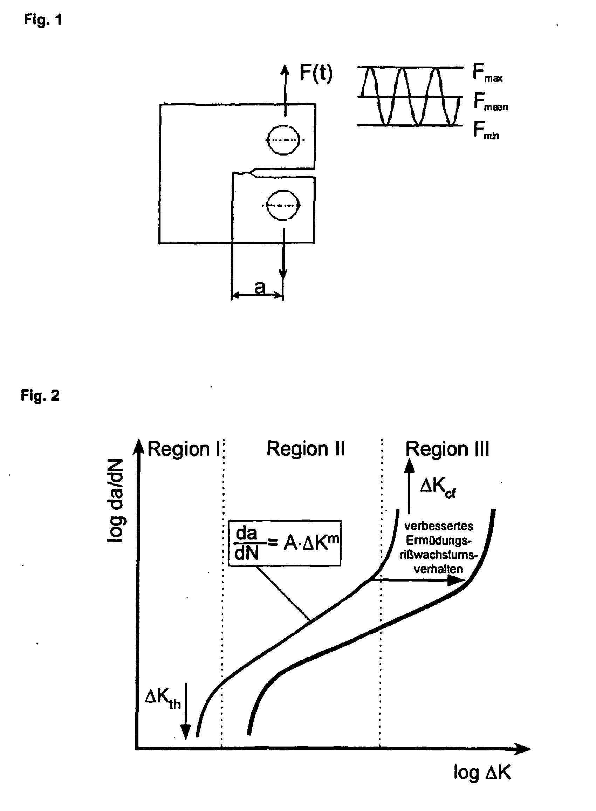

Using these concepts FCG rates, da/dN, may be controlled by the stress intensity factor range at the crack tip, $\Delta K_I = K_{Imax} - K_{Imin}$ [Herzberg, R.W. and Manson, J.A. (1980). Fatigue of Engineering Polymers. Academic Press, New York.]. Frequently, over a certain crack growth rate range an extended linear section is revealed on a double logarithmic scale by many plastics, indicating a power law relationship of the form

$$\frac{da}{dN} = A \cdot K_I{}^m$$

where $A$ and $m$ are constants, which depend on the material as well as on test variables such as temperature, environment, frequency and stress ratio. However, this relationship generally holds true only over an intermediate range of crack growth rates. When investigating a wide range of da/dN, deviations from the power law may be observed as illustrated schematically in Fig. 2. That is, crack growth rates in region I decrease rapidly to vanishingly small values as $\Delta K_I$ reaches the threshold value, $\Delta K_{Ith}$ and they increase markedly in region III as $\Delta K_{Imax}$ approaches the material's fracture toughness, $K_{Ic}$ and crack propagation becomes unstable.

It can be depicted from Fig. 2, that it is desirable to find materials whose curve in the diagram of Fig. 2 is as much to the right as possible, i.e. where the corresponding log $\Delta K$ - value for a given da/dN - value is as large as possible. It is further desireable to find materials where the slope of the linear portion (i.e. Region II) is as small as possible, thus indicating a smaller sensitivity of crack propagation to increased stress.

EXPERIMENTAL

For the FCG tests specimens of the compact type (C(T)) configuration (see Fig. 1) with a specimen width of 50 mm are machined from 4 mm thick injection moulded plaques. Precracks are introduced into the test specimens prior to the fracture mechanical experiments by pressing a fresh commercial razor blade with a nominal thickness of 0.1 mm at room temperature into the V-notch tip.

Fatigue crack growth testing is conducted with a servo-hydraulic closed-loop testing machine (type MTS 831) under sinusoidal load at a frequency of 10 Hz and an R-ratio ($F_{min}/F_{max}$) of 0.1. Crack lengths values are monitored with the aid of travelling microscope units equipped with linear variable transducers for displacement measurements.

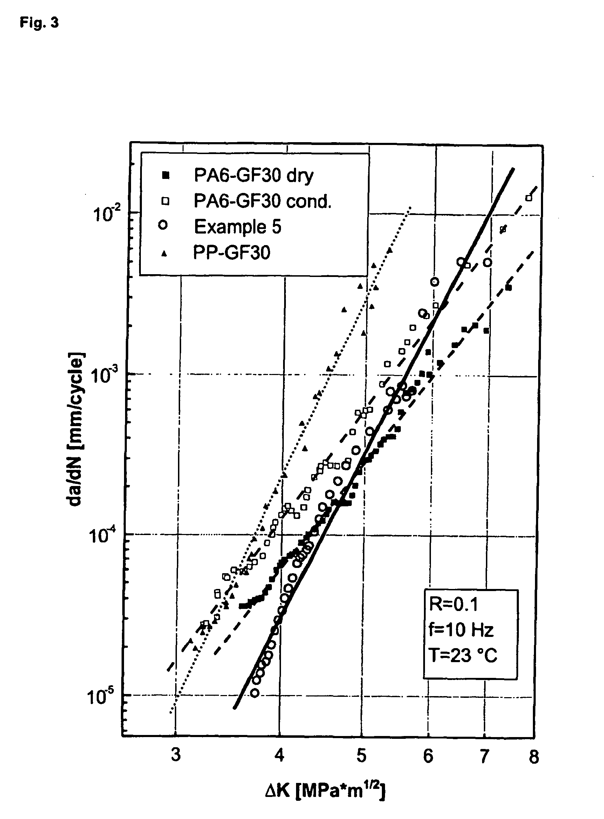

It can be seen from Fig. 3, that example 5, a glassfibre reinforced polypropylene composition (solid line through hollow circles), is comparable to glassfibre reinforced polyamide (dashed lines through hollow and solid squares), both in relation to absolute stress levels as well as relating to the steepness of the line. Compared therewith is a conventional glassfibre reinforced polypropylene (dotted line through solid triangles), which is a propylene homopolymer with an isotacticity of 94.0 %, containing 30 wt% glass fibers, which has an MFR of the compound of 2.0 g/10 min.

**Claims**

1. Glassfiber-reinforced polypropylene composition with an improved balance of mechanical and thermomechanical properties, which consists of

   a) 30 - 92 wt% of a component **A** which is a propylene homopolymer with an isotacticity $\geq$ 96% and/or a propylene copolymer which comprises up to 10 wt% of one or more $C_4$-$C_8$ $\alpha$-olefins and/or ethylene with an isotacticity of the propylene homopolymer matrix of $\geq$ 96%, which component **A** has an MFR of $\geq$ 10 g/10 min at 230 °C/2.16 kg,
   b) 3 - 35 wt% of a component **B** which is a heterophasic propylene/ethylene copolymer with up to 10 wt% of ethylene with an isotacticity of the propylene homopolymer matrix of $\geq$ 96%, which component **B** has an MFR of 0.1 to 2.0 g/10 min at 230 °C/2.16 kg and
   c) 5 - 50 wt% of reinforcing glass fibers, and
   d) 0 -5 wt%, based on weight of the composition, of compatibilizer, and
   e) additives in an amount of from 0 to less than 2 wt% each, based on the total weight of the composition.

2. Glassfiber-reinforced polypropylene composition according to claim 1, **characterized in that** component **A** is a propylene homopolymer.

3. Glassfiber-reinforced polypropylene composition according to any one of claims 1 or 2, **characterized in that** component **A** is a heterophasic propylene copolymer.

4. Glassfiber-reinforced polypropylene composition according to any one of claims 1 to 3, **characterized in that** component **B** is a propylene/ethylene copolymer with from 2 to 6 wt% of ethylene.

5. Glassfiber-reinforced polypropylene composition according to any one of claims 1 to 4, **characterized in that** the polypropylene composition contains an amount of from 20 - 40 wt% of reinforcing glass fibers.

**6.** Glassfiber-reinforced polypropylene composition according to any one of claims 1 to 5, **characterized in that** it contains from 5 - 15 wt% of component **B**.

**7.** Glassfiber-reinforced polypropylene composition according to any one of claims 1 to 6, **characterized in that** the reinforcing glassfibers are predominantly comprised of glassfibers with a filament-diameter of about 10-15 $\mu$m.

**8.** Use of glassfiber-reinforced polypropylene composition according to any one of claims 1 to 7, for producing articles with an improved balance of mechanical and thermomechanical properties for automotive and electric appliance applications.

## Patentansprüche

**1.** Glasfaserverstärkte Polypropylenzusammensetzung mit einem verbesserten Ausgleich von mechanischen und thermomechanischen Eigenschaften, welche besteht aus

a) 30 bis 92 Gew.-% einer Komponente A, welche ein Propylenhomopolymer mit einer Isotaktizität von $\geq$ 96% und/oder ein Propylencopolymer ist, welches bis zu 10 Gew.-% von einem oder mehreren $C_4$-$C_8$ $\alpha$-Olefinen und/oder Ethylen mit einer Isotaktizität der Propylenhomopolymermatrix von $\geq$ 96% umfasst,
worin Komponente A eine Schmelzflussrate von $\geq$ 10 g/ 10 min bei 230°C/ 2,16 kg hat,
b) 3 bis 35 Gew.-% einer Komponente B, welches ein heterophasisches Propylen/Ethylencopolymer mit bis zu 10 Gew.-% Ethylen mit einer Isotaktizität der Propylenhomopolymermatrix von $\geq$ 96% ist,
worin Komponente B eine Schmelzflussrate von 0,1 bis 2,0 g/10 min bei 230°C/2,16 kg hat, und
c) 5 bis 50 Gew.-% aus verstärkenden Glasfasern, und
d) 0 bis 5 Gew.-%, basierend auf dem Gewicht der Zusammensetzung, eines Verträglichkeitsvermittlers, und
e) Zusätze in einer Menge von jeweils 0 bis weniger als 2 Gew.-%, basierend auf dem Gesamtgewicht der Zusammensetzung.

**2.** Glasfaserverstärkte Polypropylenzusammensetzung gemäß Anspruch 1, dadurch charakterisiert, dass Komponente A ein Propylenhomopolymer ist.

**3.** Glasfaserverstärkte Polypropylenzusammensetzung gemäß einem der Ansprüche 1 oder 2, dadurch charakterisiert, dass Komponente A ein heterophasisches Propylencopolymer ist.

**4.** Glasfaserverstärkte Polypropylenzusammensetzung gemäß einem der Ansprüche 1 bis 3, dadurch charakterisiert, dass Komponente B ein Polypropylen/Ethylencopolymer mit von 2 bis 6 Gew.-% Ethylen ist.

**5.** Glasfaserverstärkte Polypropylenzusammensetzung gemäß einem der Ansprüche 1 bis 4, dadurch charakterisiert, dass die Polypropylenzusammensetzung eine Menge von 20 bis 40 Gew.-% an verstärkenden Glasfasern enthält.

**6.** Glasfaserverstärkte Polypropylenzusammensetzung gemäß einem der Ansprüche 1 bis 5, dadurch charakterisiert, dass sie von 5 bis 15 Gew.-% der Komponente B enthält.

**7.** Glasfaserverstärkte Polypropylenzusammensetzung gemäß einem der Ansprüche 1 bis 6, dadurch charakterisiert, dass die verstärkenden Glasfasern vor allem Glasfasern mit einem Faserdurchmesser von ungefähr 10 bis 15 $\mu$m umfassen.

**8.** Verwendung der glasfaserverstärkten Polypropylenzusammensetzung gemäß einem der Ansprüche 1 bis 7 zur Herstellung von Gegenständen mit einem verbesserten Ausgleich von mechanischen und thermomechanischen Eigenschaften für Anwendungen im Automobilbereich und für elektrische Vorrichtungen.

## Revendications

**1.** Composition de polypropylène renforcée par des fibres de verre, ayant un meilleur équilibre des propriétés mécaniques et thermomécaniques, constituée de :

a) 30 à 92 % en poids d'un composant A qui est un homopolymère de propylène avec une isotacticité $\geq$ 96 %

et/ou un copolymère de propylène qui comprend jusqu'à 10 % en poids d'une ou plusieurs $\alpha$-oléfines en $C_4$-$C_8$ et/ou d'éthylène avec une isotacticité de la matrice d'homopolymère de propylène $\geq$ 96 %, lequel composant A a un indice d'écoulement à l'état fondu (MFR) $\geq$ 10 g/10 min à 230°C/2,16 kg,

b) 3 à 35 % en poids d'un composant B qui est un copolymère de propylène/éthylène hétérophasique ayant jusqu'à 10 % en poids d'éthylène avec une isotacticité de la matrice d'homopolymère de propylène $\geq$ 96 %, lequel composant B a un indice d'écoulement à l'état fondu (MFR) de 0,1 à 2,0 g/10 min à 230°C/2,16 kg, et

c) 5 à 50 % en poids de fibres de verre de renforcement, et

d) 0 à 5 % en poids, par rapport au poids de la composition, d'un agent de compatibilité, et

e) des additifs en une quantité de 0 à moins de 2 % en poids chacun, par rapport au poids total de la composition.

2. Composition de polypropylène renforcée par des fibres de verre selon la revendication 1, **caractérisée en ce que** le composant A est un homopolymère de propylène.

3. Composition de polypropylène renforcée par des fibres de verre selon l'une quelconque des revendications 1 et 2, **caractérisée en ce que** le composant A est un copolymère de propylène hétérophasique.

4. Composition de polypropylène renforcée par des fibres de verre selon l'une quelconque des revendications 1 à 3, **caractérisée en ce que** le composant B est un copolymère de propylène/éthylène contenant de 2 à 6 % en poids d'éthylène.

5. Composition de polypropylène renforcée par des fibres de verre selon l'une quelconque des revendications 1 à 4, **caractérisée en ce que** la composition de polypropylène contient une quantité de 20 à 40 % en poids de fibres de verre de renforcement.

6. Composition de polypropylène renforcée par des fibres de verre selon l'une quelconque des revendications 1 à 5, **caractérisée en ce qu'**elle contient de 5 à 15 % en poids de composant B.

7. Composition de polypropylène renforcée par des fibres de verre selon l'une quelconque des revendications 1 à 6, **caractérisée en ce que** les fibres de verre de renforcement sont principalement constituées de fibres de verre ayant un diamètre de filament d'environ 10 à 15 $\mu$m.

8. Utilisation d'une composition de polypropylène renforcé de fibres de verre selon l'une quelconque des revendications 1 à 7, pour la production d'objets ayant un meilleur équilibre des propriétés mécaniques et thermomécaniques pour des applications aux automobiles et aux appareils électriques.

**Fig. 1**

**Fig. 2**

**Fig. 3**

## REFERENCES CITED IN THE DESCRIPTION

**Patent documents cited in the description**

- WO 0071338 A
- US 4603153 A
- US 5082889 A

**Non-patent literature cited in the description**

- **KINLOCH, A.J. ; YOUNG, R.J.** Fracture Behaviour of Polymers. Applied Science Publishers Ltd, 1983
- **HERZBERG, R.W. ; MANSON, J.A.** Fatigue of Engineering Polymers. Academic Press, 1980